(19) Europäisches Patentamt / European Patent Office / Office européen des brevets

(11) **EP 2 889 179 B1**

(12) **EUROPEAN PATENT SPECIFICATION**

(45) Date of publication and mention
of the grant of the patent:
**09.01.2019 Bulletin 2019/02**

(21) Application number: **14191294.9**

(22) Date of filing: **31.10.2014**

(51) Int Cl.:
*B60L 15/20* (2006.01)   *B60W 10/00* (2006.01)
*B60W 20/00* (2016.01)   *B60L 3/12* (2006.01)
*B60L 11/18* (2006.01)   *H02P 21/00* (2016.01)
*H02P 21/14* (2016.01)   *B60L 15/02* (2006.01)
*B60K 1/00* (2006.01)

(54) **Control method and system of electric vehicle**

Verfahren und System für ein Elektrofahrzeug

Système et procédé de commande de véhicule électrique

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.12.2013 KR 20130162932**

(43) Date of publication of application:
**01.07.2015 Bulletin 2015/27**

(73) Proprietor: **Hyundai Motor Company
Seoul 137-938 (KR)**

(72) Inventors:
• **Lim, Jae-Sang**
**000-000 Gyeonggi-do (KR)**
• **Lim, Seong Yeop**
**000-000 Seoul (KR)**
• **Kang, Gu Bae**
**000-000 Gyeonggi-do (KR)**
• **Cha, Ji Wan**
**000-000 Incheon (KR)**
• **Kim, Young Un**
**000-000 Gyeonggi-do (KR)**

(74) Representative: **Isarpatent
Patent- und Rechtsanwälte Behnisch Barth
Charles
Hassa Peckmann & Partner mbB
Friedrichstrasse 31
80801 München (DE)**

(56) References cited:
**EP-A1- 2 093 098**   **US-A1- 2008 116 842**
**US-A1- 2009 237 021**   **US-A1- 2013 147 417**

## Description

## BACKGROUND

**(a) Field of the Invention**

The present invention relates to a control method and system of an electric vehicle. More particularly, the present invention relates to a control method and system of an electric vehicle that reduces fuel consumption and cost by more efficiently controlling a motor disposed within the electric vehicle.

**(b) Description of the Related Art**

An electric vehicle has been developed to help with environmental pollution by developing alternative energy sources. An electric vehicle includes a motor that is configured to propel the vehicle and a high voltage battery that is configured to supply power to the motor. A battery is an energy source used to drive the motor, and is configured to supply power to the motor using an inverter.

A maximum torque per ampere (MTPA) control method is one existing motor control method. The MTPA control method sets a current map by sweeping current supplied to the motor. The MTPA control method controls the motor using mathematical modeling, but the nonlinearity of the motor cannot be represented by a mathematical equation causing the mathematical modeling to usually be ineffective.

In order to account for the problem, a motor control method that sets a current map from an operating point that minimizes output current of the motor is used. In particular, an operating point can be calculated from an equal torque region obtained by current sweep. However, since the motor control method does not consider a loss of the motor and the inverter, the measuring factors (e.g., motor torque, motor current, motor voltage, power factor of the motor, direct current (DC) voltage, and DC current) are usually greater than the actual value. Accordingly, when various measuring factors are used, an output result may be distorted by the incorrect measuring factors. Further, since various measuring factors are used, a measuring system becomes more complex, which results in increased system manufacturing costs.

Document EP 2 093 098 A1 discloses a wheel driving apparatus comprising an electric motor and a gap changer.

An apparatus for driving a switching member of a power converter is known from Document US 2009/0237021 A1.

The above information disclosed in this section is merely for enhancement of understanding of the background of the invention and therefore it may contain information that does not form the prior art that is already known in this country to a person of ordinary skill in the art.

## SUMMARY OF THE INVENTION

The present invention provides a control method of an electric vehicle as recited in claim 1, an electric vehicle control system as recited in claim 6 and a non-transitory computer readable medium containing program instructions executed by a controller as recited in claim 9. Preferred embodiments are set out in the dependent claims. The present invention provides a control method of an electric vehicle that may reduce fuel consumption and cost by more efficiently controlling a motor disposed within an electric vehicle. Further, the present invention provides a control method of an electric vehicle that may reduce cost of a motor control system and may also simplify the motor control system.

A control method of an electric vehicle according to an exemplary embodiment of the present invention may include: supplying electricity using a battery operated by a controller, receiving electricity from the battery and generating power using a motor operated by a controller, detecting, by the controller, a torque command, a motor speed, and a motor current; calculating, by the controller, a motor voltage using the motor current; determining, by the controller, when voltage utilization, based on a speed range of the motor, is greater than a predetermined value; generating, by the controller, an operating point correcting function, based on the motor speed, in response to the voltage utilization being less than the predetermined value; calculating, by the controller, a current command, based on the motor speed, from the operating point correcting function; and outputting, by the controller, the calculated current command.

The generation of an operating point correcting function may include: determining a maximum efficiency driving current map from a first motor speed; calculating a first current magnitude and a first current angle using the first motor speed; determining a maximum efficiency operating point from a second motor speed; calculating a second current magnitude and a second current angle from the second motor speed; and generating the operating point correcting function from the first and second current magnitude and the first and second current angle. The current map may be set using the first motor speed by sweeping a first direct current (DC) supplied from the battery. In addition, the operating point may be set using the second motor speed by sweeping a second DC supplied from the battery.

Further, the generation of the operating point correcting function may further include calculating a difference of the first and second current magnitude and a difference of the first and second current angle; and generating the operating point correcting function by approximating the difference of the current magnitude and the current angle. The difference of the current magnitude and the current angle may be approximated using a predetermined quadratic function. The control method of an electric vehicle may further include operating the motor using overmodulation in response to the voltage utilization being greater than a predetermined value.

According to an exemplary embodiment of the present invention, since an optimal operating point may be set based on a motor speed through an operating point correcting function, fuel consumption of a vehicle may be reduced. Further, since measuring factors necessary for controlling a motor may be minimized, system configuration may be simplified.

## BRIEF DESCRIPTION OF THE DRAWINGS

The accompanying drawings are referenced to describe exemplary embodiments of the present invention, and therefore a technical spirit of the present invention is not to be construed to be limited to the accompanying drawings.

FIG. 1 is an exemplary block diagram illustrating an electric vehicle according to an exemplary embodiment of the present invention;

FIG. 2 is an exemplary flowchart illustrating a control method of an electric vehicle according to an exemplary embodiment of the present invention;

FIG. 3 is an exemplary flowchart illustrating a method for obtaining an operating point correcting function according to an exemplary embodiment of the present invention;

FIG. 4 is an exemplary flowchart illustrating a method for obtaining a new current command according to an exemplary embodiment of the present invention; and

FIG. 5 is an exemplary graph illustrating an operating point according to motor speed according to an exemplary embodiment of the present invention.

## DETAILED DESCRIPTION OF THE EMBODIMENTS

It is understood that the term "vehicle" or "vehicular" or other similar term as used herein is inclusive of motor vehicles in general such as passenger automobiles including sports utility vehicles (SUV), buses, trucks, various commercial vehicles, watercraft including a variety of boats and ships, aircraft, and the like, and includes hybrid vehicles, electric vehicles, plug-in hybrid electric vehicles, hydrogen-powered vehicles and other alternative fuel vehicles (e.g. fuels derived from resources other than petroleum). As referred to herein, a hybrid vehicle is a vehicle that has two or more sources of power, for example both gasoline-powered and electric-powered vehicles.

Although exemplary embodiment is described as using a plurality of units to perform the exemplary process, it is understood that the exemplary processes may also be performed by one or plurality of modules. Additionally, it is understood that the term controller/control unit refers to a hardware device that includes a memory and a processor. The memory is configured to store the modules and the processor is specifically configured to execute said modules to perform one or more processes which are described further below.

Furthermore, control logic of the present invention may be embodied as non-transitory computer readable media on a computer readable medium containing executable program instructions executed by a processor, controller/control unit or the like. Examples of the computer readable mediums include, but are not limited to, ROM, RAM, compact disc (CD)-ROMs, magnetic tapes, floppy disks, flash drives, smart cards and optical data storage devices. The computer readable recording medium can also be distributed in network coupled computer systems so that the computer readable media is stored and executed in a distributed fashion, e.g., by a telematics server or a Controller Area Network (CAN).

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items.

It will be understood that, although the terms "first," "second," etc. may be used herein to describe various elements, these elements should not be limited by these terms. These terms are only used to distinguish one element from another element. For instance, a first element discussed below could be termed a second element without departing from the teachings of the present invention. Similarly, the second element could also be termed the first element.

Unless specifically stated or obvious from context, as used herein, the term "about" is understood as within a range of normal tolerance in the art, for example within 2 standard deviations of the mean. "About" can be understood as within 10%, 9%, 8%, 7%, 6%, 5%, 4%, 3%, 2%, 1%, 0.5%, 0.1%, 0.05%, or 0.01% of the stated value. Unless otherwise clear from the context, all numerical values provided herein are modified by the term "about."

The present invention will be described more fully hereinafter with reference to the accompanying drawings, in which exemplary embodiments of the invention are shown. As those skilled in the art would realize, the described exemplary embodiments may be modified in various different ways, all without departing from the spirit or scope of the present invention.

In describing the present invention, parts that are not related to the description will be omitted. Like reference numerals generally designate like elements throughout the specification. In addition, the magnitude and thickness of each configuration shown in the drawings are arbitrarily shown for better understanding and ease of description, but the present invention is not limited thereto. In the drawings, the thickness of layers, films, panels, regions, etc., are exaggerated for clarity.

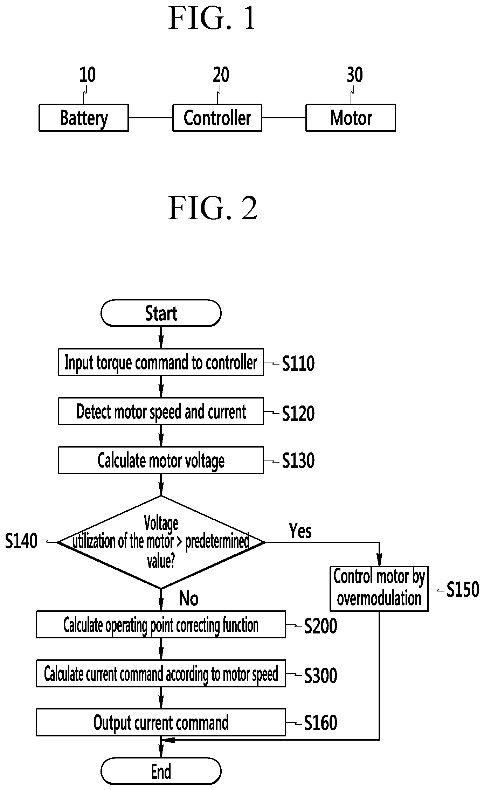

FIG. 1 is an exemplary block diagram illustrating an electric vehicle according to an exemplary embodiment of the present invention. As shown in FIG. 1, an electric vehicle according to an exemplary embodiment of the present invention may include a battery 10 configured to supply electricity, a motor 30 configured to receive electricity from the battery 10 and generate power, and a controller 20 configured to operate the battery 10 and the motor 30. The battery 10 may be operated by the controller to supply direct current power (DC power), and particularly supply substantially constant voltage power.

The controller 20 may include one or more microprocessors operated by a predetermined program or hardware that includes the microprocessor. The predetermined program may include a series of commands configured to perform a control method of an electric vehicle according to an exemplary embodiment of the present invention to be described below. Generally, the controller 20 may be an inverter configured to receive electricity from the battery 10 and operate the motor 30.

FIG. 2 is an exemplary flowchart illustrating a control method of an electric vehicle according to an exemplary embodiment of the present invention. As shown in FIG. 2, when a torque command is input to the controller 20 (S110), the controller 20 may be configured to detect a motor speed and current (S120), and the controller 20 may be configured to calculate a motor voltage from the motor current (S130). The controller 20 may also be configured to determine whether voltage utilization of the motor 30 is greater than about 1 (S140). When the voltage utilization of the motor is greater than about 1, the controller may be configured to deteremine a substantial amount of voltage is used in a relatively high speed range (e.g., predetermined speed range) and may further be configured to operate the motor 30 by overmodulation (S150). An overmodulation control method is generally known to those skilled in the art, and detailed description thereof will be omitted.

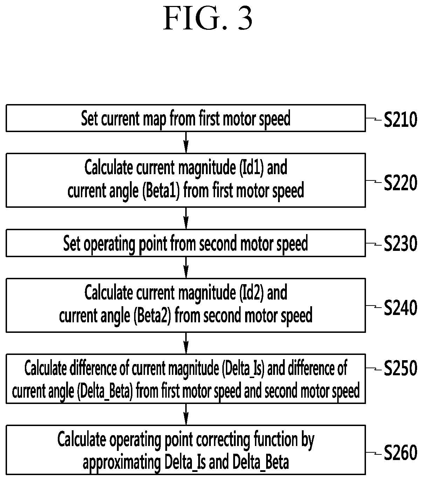

When the voltage utilization of the motor 30 is less than about 1, the controller 20 may be configured to calculate an operating point correcting function based on the motor speed (S200). Hereinafter, the process of obtaining an operating point correcting function based on the motor speed (S200) will be described in detail referring to FIG. 3. In particular, the controller 20 may be configured to set a current map with respect to a first motor speed by sweeping a first direct current supplied from the battery 10 (S210). The first motor speed may be about 1500 revolutions per minute (RPM).

Additionally, the controller 20 may be configured to calculate a first magnitude (Is1) of a first d-axis current (Idl) and a first q-axis current (Iq1), and a first angle (Beta1) of the first d-axis current (Idl) and the first q-axis current (Iq1) within a synchronous reference frame with respect to a torque command at the first motor speed (S220). The controller 20 may be configured to set an operating point with respect to a second motor speed by sweeping a second direct current supplied from the battery 10 (S230). Further, the controller 20 may be configured to calculate a second magnitude (Is2) of a second d-axis current (Id2) and a second q-axis current (Iq2), and a second angle (Beta2) of the second d-axis current (Id2) and the second q-axis current (Iq2) with respect to the second motor speed (S240).

The controller 20 may be configured to calculate a difference between the first and second current magnitude and a difference between the first and second current angle (S250). The difference (Delta_Is) of the current magnitude may be a difference between Is1 and Is2. The difference (Delta_Beta) of the current angle may be a difference between Beta1 and Beta2. The difference (Delta Is) of the current magnitude and the difference (Delta Beta) of the current angle may be calculated using the following equations:

Equation 1

$$\text{Delta\_Is} = \text{Is2} - \text{Is1}$$

Equation 2

$$\text{Delta\_Beta} = \text{Beta2} - \text{Beta1}$$

The controller 20 may further be configured to approximate the difference of the current magnitude (Delta Is) and the difference of the current angle (Delta_Beta), and calculate an operating point correcting function (Func_Delta_Is, Func_Delta_Beta) (S260). The controller 20 may be configured to obtain a maximum efficiency operating point within overall speed range by interpolating the first d-axis current (Idl) c and the second d-axis current (Id2) and by interpolating the first q-axis current (Iq1) and the first q-axis current (Iq2). Subsequently, the controller 20 may be configured to calculate the operating point correcting function by a linear function or a quadratic function, when the controller 20 interpolates the d-axis current (Idl) calculated from the first motor speed and the d-axis current (Id2) calculated from the second motor speed, or when the q-axis current (Iq1) calculated from the first motor speed and the q-axis current (Iq2) calculated from the second motor speed. Referring to FIG. 2, the controller 20 may be configured to calculate a current command with respect to the motor speed using the operating point correcting function (S300).

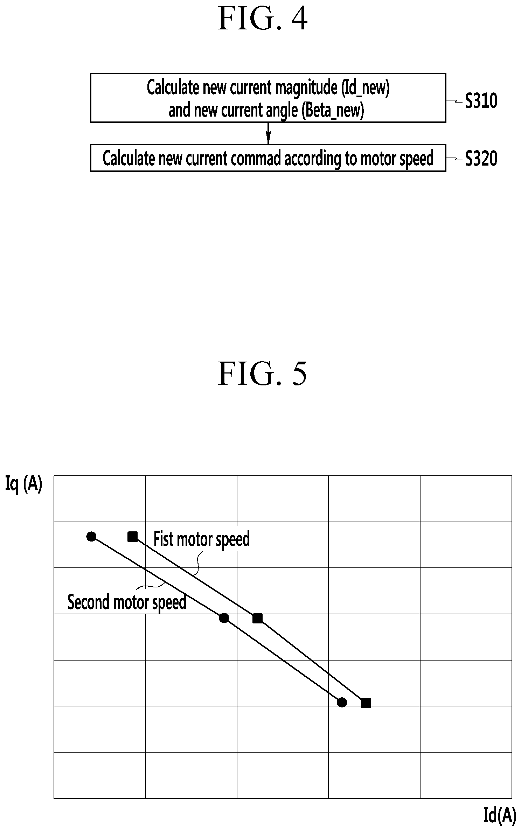

As shown in FIG. 4, the controller 20 may be configured to calculate a new current magnitude (Is_new) and a new current angle (Beta_new) using the operating point correcting function (S310). The new current magnitude (Is new) and the new current angle (Beta new) may then be calculated by the following equations:

Equation 3

$$\text{Is\_new} = \text{Is1} + \text{Func\_Delta \_Is (real motor speed - first motor speed)}$$

Equation 4

$$\text{Beta\_new} = \text{Beta1} + \text{Func\_Delta\_Beta (real motor speed - first motor speed)}$$

wherein, the Func_Delta_Is() is the operating point correcting function of a current magnitude and the Func_Delta_Beta() is the operating point correcting function of a current angle.

The controller 20 may be configured to calculate a new d-axis current command (Id_new) and a new q-axis current command (Iq_new) within a synchronous reference frame from the new current magnitude (Is_new) and the new current angle (Beta new) at step S320. The new d-axis current command (Id_new) and the new q-axis current command (Iq_new) may be calculated from the following equations:

Equation 5

$$\text{Id\_new} = -\text{Is\_new} * \cos (180-\text{Beta\_new})$$

Equation 6

$$\text{Iq\_new} = \text{Is\_new} * \sin (180-\text{Beta\_new})$$

Referring to FIG. 2, the controller 20 may be configured to then output the new d-axis current command (Id_new) and the new q-axis current command (Iq_new) to the motor 30.

FIG. 5 is an exemplary graph illustrating an operating point according to a motor speed according to an exemplary embodiment of the present invention. In particular, FIG. 5 illustrates an operating point obtained from the first motor speed (e.g., about 1500 RPM) and an operating point obtained from the second motor speed (e.g., about 2000 RPM).

Generally, as the motor speed increases, core loss of the motor also increases. Due to the core loss, the maximum efficiency operating point needs more d-axis current that moves in a negative direction. Since the core loss increases as the motor speed increases, the maximum efficiency operating point may be different for each motor speed. Accordingly, the motor 30 may be operated while also taking the variation of core loss based on motor speed into account, which allows for a maximized efficiency while driving based on motor speed.

In an exemplary embodiment of the present invention, a current map may be set for one motor speed. In other words, the current map may be set by using motor torque and direct current of the battery 10. Accordingly, when the motor is operated while substantially maintaining a voltage of the battery 10, the output of the battery 10 may be determined by DC current of the battery 10 (i.e, battery output = battery voltage * battery current). Further, when an equal torque of a curve is determined by current sweep, the output of the motor 30 may become equivalent (i.e., motor output = motor speed * motor torque). This means the maximum efficiency operating point of the motor system when the input is the output of the battery and the output is the motor output, the battery 10 output may be minimized, due to the output of the motor 30 being substantially equivalent to the input. In other words, since the output of the battery 10 is substantially constant, the maximum efficient operating point may be the minimum point of DC current. Therefore, a current map determined by direct current of the battery and required torque may become a maximum efficiency current map. By using this method, a measuring error may be reduced and a measuring system may be simplified.

Moreover, according to an exemplary embodiment of the present invention, since the motor may be operated by measuring direct current of the battery, it may be possible to operate the motor based on the efficiency of the inverter. Furthermore, a voltage output from the battery may be maintained substantially constant. Therefore, when minimum input power (i.e., direct voltage * direct current) is determined by verifying direct current of the battery, an operating point of maximum efficiency (minimum loss) may be obtained. By using this method, fuel consumption may be reduced.

**<Description of Symbols>**

10: battery
20: controller
30: motor

**Claims**

1.  A control method of an electric vehicle, comprising:

    operating, by a controller (20), a battery (10) and a motor (30);
    detecting, by the controller (20), a torque command, a motor speed, and a motor current;
    calculating, by the controller (20), a motor voltage from the motor current;
    determining, by the controller (20), whether voltage utilization based on a speed range of the motor (30) is greater than a predetermined value;
    generating, by the controller (20), an operating point correcting function based on the motor speed in response to the voltage utilization being less than the predetermined value;
    calculating, by the controller (20), a current command according to the motor speed from the operating point correcting function; and
    outputting, by the controller (20), the calculated current command;
    wherein the generating of an operating point correcting function, includes: setting, by the controller, a current map with respect to a first motor speed;
    calculating, by the controller, a first magnitude of a first d-axis current and a first q-axis current, and a first angle of the first d-axis current and the first q-axis current within a synchronous reference frame with respect to a torque command at the first motor speed;
    setting, by the controller, an operating point with respect to a second motor speed;
    calculating, by the controller, a second magnitude of a second d-axis current and a second q-axis current, and a second angle of the second d-axis current and the second q-axis current with respect to the second motor speed;
    calculating, by the controller, a difference between the first and second current magnitude and a difference between the first and second current angle; and
    calculating, by the controller, the operating point correcting function by approximating the difference of the current magnitude and the difference of the current angle.

2.  The control method of electric vehicle of claim 1, wherein the determining of the current map from the first motor speed includes sweeping, by the controller, a first direct current supplied from the battery.

3.  The control method of electric vehicle of claim 1, wherein the determining of the operating point from the second motor speed includes sweeping, by the controller, a second direct current supplied from the battery.

4.  The control method of electric vehicle of claim 1, wherein the approximating of the difference between the first and second current magnitude and the difference between the first and second current angle is approximated using a quadratic function.

5. The control method of electric vehicle of claim 1, further comprising:

   operating, by the controller (20), the motor (30) by overmodulation in response to the voltage utilization being greater than a predetermined value.

6. An electric vehicle control system, comprising:

   a battery (10) configured to supply electricity;
   a motor configured to receive electricity from the battery (10) and generate power;
   a controller (20) configured to:

      operate the battery (10) and the motor (30);
      detect a torque command, a motor speed, and a motor current;
      calculate a motor voltage using the motor current;
      determine when voltage utilization, based on a speed range of the motor (30), is greater than a predetermined value;
      generate an operating point correcting function based on the motor speed in response to the voltage utilization being less than the predetermined value;
      set a current map with respect to a first motor speed;
      calculate a first magnitude of a first d-axis current and a first q-axis current, and a first angle of the first d-axis current and the first q-axis current within a synchronous reference frame with respect to a torque command at the first motor speed;
      set an operating point with respect to a second motor speed;
      calculate a second magnitude of a second d-axis current and a second q-axis current, and a second angle of the second d-axis current and the second q-axis current with respect to the second motor speed;
      calculate a difference between the first and second current magnitude and a difference between the first and second current angle; and
      calculate the operating point correcting function by approximating the difference of the current magnitude and the difference of the current angle;
      calculate a current command based on the motor speed from the operating point correcting function; and
      output the calculated current command.

7. The electric vehicle control system of claim 6, wherein the controller (20) is further configured to approximate the difference between the first and second current magnitude and the difference between the first and second current angle using a quadratic function.

8. The electric vehicle control system of claim 6, wherein the controller (20) is further configured to operate the motor (30) by overmodulation in response to the voltage utilization being great than a predetermined value.

9. A non-transitory computer readable medium containing program instructions executed by a controller (20), the computer readable medium comprising:

   program instructions that control a battery (10) and a motor (30);
   program instructions that detect a torque command, a motor speed, and a motor current;
   program instructions that calculate a motor voltage from the motor current;
   program instructions that determine whether voltage utilization according to a speed range of the motor (30) is greater than a predetermined value;
   program instructions that generate an operating point correcting function based on the motor speed in response to the voltage utilization being less than the predetermined value;
   program instructions that calculate a current command based on the motor speed from the operating point correcting function; and
   program instructions that output the calculated current command;.

   wherein the generating of an operating point correcting function includes:

program instructions that set a current map with respect to a first motor speed;

program instructions that calculate a first magnitude of a first d-axis current and a first q-axis current, and a first angle of the first d-axis current and the first q-axis current within a synchronous reference frame with respect to a torque command at the first motor speed;

program instructions that set an operating point with respect to a second motor speed;

program instructions that calculate a second magnitude of a second d-axis current and a second q-axis current, and a second angle of the second d-axis current and the second q-axis current with respect to the second motor speed;

program instructions that calculate a difference between the first and second current magnitude and a difference between the first and second current angle; and

program instructions that calculate the operating point correcting function by approximating the difference of the current magnitude and the difference of the current angle.

10. The non-transitory computer readable medium of claim 9, wherein the determining of the current map from the first motor speed includes program instructions that sweep a first direct current supplied from the battery.

11. The non-transitory computer readable medium of claim 9, wherein the determining of the operating point from the second motor speed includes program instructions that sweep a second direct current supplied from the battery.

12. The non-transitory computer readable medium of claim 9, wherein the approximating the difference between the current magnitude and the current angle includes program instructions that approximate the difference between the first and second current magnitude and the difference of the first and second current angle using a quadratic function.

13. The non-transitory computer readable medium of claim 9, further comprising program instructions that operate the motor (30) by overmodulation in response to the voltage utilization being greater than a predetermined value.

**Patentansprüche**

1. Steuerungsverfahren für ein elektrisches Fahrzeug nach, umfassend:

Betreiben, durch eine Steuereinheit (20), einer Batterie (10) und eines Motors (30);

Detektieren, durch die Steuereinheit (20), eines Drehmomentbefehls, einer Motordrehzahl und eines Motorstroms;

Berechnen, durch die Steuereinheit (20), einer Motorspannung anhand des Motorstroms;

Bestimmen, durch die Steuereinheit (20), ob eine Spannungsauslastung auf der Basis eines Drehzahlbereichs des Motors (30) größer ist als ein zuvor festgelegter Wert;

Generieren, durch die Steuereinheit (20), einer Betriebspunktkorrekturfunktion auf der Basis der Motordrehzahl in Reaktion darauf, dass die Spannungsauslastung kleiner ist als der zuvor festgelegte Wert;

Berechnen, durch die Steuereinheit (20), eines Strombefehls gemäß der Motordrehzahl anhand der Betriebspunktkorrekturfunktion; und

Ausgeben, durch die Steuereinheit (20), des berechneten Strombefehls;

wobei das Generieren einer Betriebspunktkorrekturfunktion Folgendes umfasst:

Einstellen, durch die Steuereinheit, einer Stromkarte mit Bezug auf eine erste Motordrehzahl;

Berechnen, durch die Steuereinheit, einer ersten Größenordnung eines ersten d-Achsen-Stroms und eines ersten q-Achsen-Stroms und eines ersten Winkels des ersten d-Achsen-Stroms und des ersten q-Achsen-Stroms innerhalb eines synchronen Bezugsrahmens mit Bezug auf einen Drehmomentbefehl bei der ersten Motordrehzahl;

Einstellen, durch die Steuereinheit, eines Betriebspunktes mit Bezug auf eine zweite Motordrehzahl;

Berechnen, durch die Steuereinheit, einer zweiten Größenordnung eines zweiten d-Achsen-Stroms und eines zweiten q-Achsen-Stroms und eines zweiten Winkels des zweiten d-Achsen-Stroms und des zweiten q-Achsen-Stroms mit Bezug auf die zweite Motordrehzahl;

Berechnen, durch die Steuereinheit, einer Differenz zwischen der ersten und der zweiten Stromgrößenordnung und einer Differenz zwischen dem ersten und dem zweiten Stromwinkel; und

Berechnen, durch die Steuereinheit, der Betriebspunktkorrekturfunktion durch Nähern der Differenz der Stromgrößenordnung und der Differenz des Stromwinkels.

2. Steuerungsverfahren für ein elektrisches Fahrzeug nach Anspruch 1, wobei das Bestimmen der Stromkarte anhand der ersten Motordrehzahl das Abtasten, durch die Steuereinheit, eines von der Batterie gelieferten ersten Gleichstroms umfasst.

3. Steuerungsverfahren für ein elektrisches Fahrzeug nach Anspruch 1, wobei das Bestimmen des Betriebspunktes der zweiten Motordrehzahl das Abtasten, durch die Steuereinheit, eines von der Batterie gelieferten zweiten Gleichstroms umfasst.

4. Steuerungsverfahren für ein elektrisches Fahrzeug nach Anspruch 1, wobei das Nähern der Differenz zwischen der ersten und der zweiten Stromgrößenordnung und der Differenz zwischen dem ersten und dem zweiten Stromwinkel unter Verwendung einer quadratischen Funktion ausgeführt wird.

5. Steuerungsverfahren für ein elektrisches Fahrzeug nach Anspruch 1, des Weiteren umfassend:

Betreiben, durch die Steuereinheit (20), des Motors (30) durch Übermodulation in Reaktion darauf, dass die Spannungsauslastung größer ist als ein zuvor festgelegter Wert.

6. Steuerungssystem für ein elektrisches Fahrzeug, das Folgendes umfasst:

eine Batterie (10), die dafür ausgestaltet ist, Elektrizität zuzuführen;
einen Motor, der dafür ausgestaltet ist, Elektrizität von der Batterie (10) zu empfangen und Strom zu erzeugen;
eine Steuereinheit (20), die ausgestaltet ist zum:

Betreiben der Batterie (10) und des Motors (30);
Detektieren eines Drehmomentbefehls, einer Motordrehzahl und eines Motorstroms;
Berechnen einer Motorspannung unter Verwendung des Motorstroms;
Bestimmen, wann eine Spannungsauslastung, auf der Basis eines Drehzahlbereichs des Motors (30), größer ist als ein zuvor festgelegter Wert;
Generieren einer Betriebspunktkorrekturfunktion auf der Basis der Motordrehzahl in Reaktion darauf, dass die Spannungsauslastung kleiner ist als der zuvor festgelegte Wert;
Erstellen einer Stromkarte mit Bezug auf eine erste Motordrehzahl;
Berechnen einer ersten Größenordnung eines ersten d-Achsen-Stroms und eines ersten q-Achsen-Stroms und eines ersten Winkels des ersten d-Achsen-Stroms und des ersten q-Achsen-Stroms innerhalb eines synchronen Bezugsrahmens mit Bezug auf einen Drehmomentbefehl bei der ersten Motordrehzahl;
Einstellen eines Betriebspunktes mit Bezug auf eine zweite Motordrehzahl;
Berechnen einer zweiten Größenordnung eines zweiten d-Achsen-Stroms und eines zweiten q-Achsen-Stroms und eines zweiten Winkels des zweiten d-Achsen-Stroms und des zweiten q-Achsen-Stroms mit Bezug auf die zweite Motordrehzahl;
Berechnen einer Differenz zwischen der ersten und der zweiten Stromgrößenordnung und einer Differenz zwischen dem ersten und dem zweiten Stromwinkel; und
Berechnen der Betriebspunktkorrekturfunktion durch Nähern der Differenz der Stromgrößenordnung und der Differenz des Stromwinkels;

Berechnen eines Strombefehls auf der Basis der Motordrehzahl der Betriebspunktkorrekturfunktion; und
Ausgeben des berechneten Strombefehls.

7. Steuerungssystem für ein elektrisches Fahrzeug nach Anspruch 6, wobei die Steuereinheit (20) des Weiteren dafür ausgestaltet ist, die Differenz zwischen der ersten und der zweiten Stromgrößenordnung und die Differenz zwischen dem ersten und dem zweiten Stromwinkel unter Verwendung einer quadratischen Funktion zu nähern.

8. Steuerungssystem für ein elektrisches Fahrzeug nach Anspruch 6, wobei die Steuereinheit (20) des Weiteren dafür ausgestaltet ist, den Motor (30) durch Übermodulation in Reaktion darauf zu betreiben, dass die Spannungsauslastung größer ist als ein zuvor festgelegter Wert.

9. Nicht-transitorisches computerlesbares Medium, das Programmanweisungen umfasst, die durch eine Steuereinheit (20) ausgeführt werden, wobei das computerlesbare Medium Folgendes umfasst:

Programmanweisungen, die eine Batterie (10) und einen Motor (30) steuern;

Programmanweisungen, die einen Drehmomentbefehl, eine Motordrehzahl und einen Motorstrom detektieren;

Programmanweisungen, die eine Motorspannung anhand des Motorstroms berechnen;

Programmanweisungen, die bestimmen, ob eine Spannungsauslastung gemäß einem Drehzahlbereichs des Motors (30) größer ist als ein zuvor festgelegter Wert;

Programmanweisungen, die eine Betriebspunktkorrekturfunktion auf der Basis der Motordrehzahl in Reaktion darauf generieren,

dass die Spannungsauslastung kleiner ist als der zuvor festgelegte Wert;

Programmanweisungen, die einen Strombefehl auf der Basis der Motordrehzahl der Betriebspunktkorrekturfunktion berechnen; und

Programmanweisungen, die den berechneten Strombefehl ausgeben;

wobei das Generieren einer Betriebspunktkorrekturfunktion Folgendes umfasst:

Programmanweisungen, die eine Stromkarte mit Bezug auf eine erste Motordrehzahl erstellen;

Programmanweisungen, die eine erste Größenordnung eines ersten d-Achsen-Stroms und eines ersten q-Achsen-Stroms und eines ersten Winkels des ersten d-Achsen-Stroms und des ersten q-Achsen-Stroms innerhalb eines synchronen Bezugsrahmens mit Bezug auf einen Drehmomentbefehl bei der ersten Motordrehzahl berechnen;

Programmanweisungen, die einen Betriebspunkt mit Bezug auf eine zweite Motordrehzahl einstellen;

Programmanweisungen, die eine zweite Größenordnung eines zweiten d-Achsen-Stroms und eines zweiten q-Achsen-Stroms und eines zweiten Winkels des zweiten d-Achsen-Stroms und des zweiten q-Achsen-Stroms mit Bezug auf die zweite Motordrehzahl berechnen;

Programmanweisungen, die eine Differenz zwischen der ersten und der zweiten Stromgrößenordnung und eine Differenz zwischen dem ersten und dem zweiten Stromwinkel berechnen; und

Programmanweisungen, die die Betriebspunktkorrekturfunktion durch Nähern der Differenz der Stromgrößenordnung und der Differenz des Stromwinkels berechnen.

**10.** Nicht-transitorisches computerlesbares Medium nach Anspruch 9, wobei das Bestimmen der Stromkarte anhand der ersten Motordrehzahl Programmanweisungen umfasst, die einen von der Batterie gelieferten ersten Gleichstrom abtasten.

**11.** Nicht-transitorisches computerlesbares Medium nach Anspruch 9, wobei das Bestimmen des Betriebspunktes der zweiten Motordrehzahl Programmanweisungen umfasst, die einen von der Batterie gelieferten zweiten Gleichstrom abtasten.

**12.** Nicht-transitorisches computerlesbares Medium nach Anspruch 9, wobei das Nähern der Differenz zwischen der Stromgrößenordnung und dem Stromwinkel Programmanweisungen umfasst, welche die Differenz zwischen der ersten und der zweiten Stromgrößenordnung und die Differenz der einen ersten und einen zweiten Stromwinkel unter Verwendung einer quadratischen Funktion nähern.

**13.** Nicht-transitorisches computerlesbares Medium nach Anspruch 9, das des Weiteren Programmanweisungen umfasst, die den Motor (30) durch Übermodulation in Reaktion darauf betreiben, dass die Spannungsauslastung größer ist als ein zuvor festgelegter Wert.

**Revendications**

**1.** Procédé de commande d'un véhicule électrique, comprenant :

le fonctionnement, par un dispositif de commande (20), d'une batterie (10) et d'un moteur (30) ;

la détection, par le dispositif de commande (20), d'un ordre de couple, d'une vitesse de moteur, et d'un courant de moteur ;

le calcul, par le dispositif de commande (20), d'une tension de moteur à partir du courant de moteur ;

le fait de déterminer, par le dispositif de commande (20), si une utilisation de tension d'après une plage de vitesses du moteur (30) est supérieure à une valeur prédéterminée ;

la génération, par le dispositif de commande (20), d'une fonction de correction de point de fonctionnement d'après la vitesse de moteur en réponse au fait que l'utilisation de tension est inférieure à la valeur prédéterminée ;

le calcul, par le dispositif de commande (20), d'un ordre de courant selon la vitesse de moteur à partir de la fonction de correction de point de fonctionnement ; et

la fourniture en sortie, par le dispositif de commande (20), de l'ordre de courant calculé ;

dans lequel la génération d'une fonction de correction de point de fonctionnement comporte : l'établissement, par le dispositif de commande, d'une carte de courant par rapport à une première vitesse de moteur ;

le calcul, par le dispositif de commande, d'une première grandeur d'un premier courant d'axe d et d'un premier courant d'axe q, et d'un premier angle du premier courant d'axe d et du premier courant d'axe q au sein d'un repère synchrone par rapport à un ordre de couple à la première vitesse de moteur ;

l'établissement, par le dispositif de commande, d'un point de fonctionnement par rapport à une seconde vitesse de moteur ;

le calcul, par le dispositif de commande, d'une seconde grandeur d'un second courant d'axe d et d'un second courant d'axe q, et d'un second angle du second courant d'axe d et du second courant d'axe q par rapport à la seconde vitesse de moteur ;

le calcul, par le dispositif de commande, d'une différence entre les première et seconde grandeurs de courant et d'une différence entre les premier et second angles de courant ; et

le calcul, par le dispositif de commande, de la fonction de correction de point de fonctionnement par approximation de la différence de la grandeur de courant et de la différence de l'angle de courant.

2. Procédé de commande de véhicule électrique selon la revendication 1, dans lequel la détermination de la carte de courant à partir de la première vitesse de moteur comporte le balayage, par le dispositif de commande, d'un premier courant continu fourni par la batterie.

3. Procédé de commande de véhicule électrique selon la revendication 1, dans lequel la détermination du point de fonctionnement à partir de la seconde vitesse de moteur comporte le balayage, par le dispositif de commande, d'un second courant continu fourni par la batterie.

4. Procédé de commande de véhicule électrique selon la revendication 1, dans lequel l'approximation de la différence entre les première et seconde grandeurs de courant et de la différence entre les premier et second angles de courant est approximée à l'aide d'une fonction quadratique.

5. Procédé de commande de véhicule électrique selon la revendication 1, comprenant en outre :

le fonctionnement, par le dispositif de commande (20), du moteur (30) par surmodulation en réponse au fait que l'utilisation de tension est supérieure à une valeur prédéterminée.

6. Système de commande de véhicule électrique, comprenant :

une batterie (10) configurée pour fournir de l'électricité ;

un moteur configuré pour recevoir l'électricité en provenance de la batterie (10) et générer de la puissance ;

un dispositif de commande (20) configuré pour :

faire fonctionner la batterie (10) et le moteur (30) ;

détecter un ordre de couple, une vitesse de moteur, et un courant de moteur ;

calculer une tension de moteur à l'aide du courant de moteur ;

déterminer lorsqu'une utilisation de tension, d'après une plage de vitesses du moteur (30), est supérieure à une valeur prédéterminée ;

générer une fonction de correction de point de fonctionnement d'après la vitesse de moteur en réponse au fait que l'utilisation de tension est inférieure à la valeur prédéterminée ;

établir une carte de courant par rapport à une première vitesse de moteur ;

calculer une première grandeur d'un premier courant d'axe d et d'un premier courant d'axe q, et un premier angle du premier courant d'axe d et du premier courant d'axe q au sein d'un repère synchrone par rapport à un ordre de couple à la première vitesse de moteur ;

établir un point de fonctionnement par rapport à une seconde vitesse de moteur ;

calculer une seconde grandeur d'un second courant d'axe d et d'un second courant d'axe q, et un second angle du second courant d'axe d et du second courant d'axe q par rapport à la seconde vitesse de moteur ;

calculer une différence entre les première et seconde grandeurs de courant et une différence entre les premier et second angles de courant ; et

calculer la fonction de correction de point de fonctionnement par approximation de la différence de la grandeur de courant et de la différence de l'angle de courant ;

calculer un ordre de courant d'après la vitesse de moteur à partir de la fonction de correction de point de fonctionnement ; et

fournir en sortie l'ordre de courant calculé.

7. Système de commande de véhicule électrique selon la revendication 6, dans lequel le dispositif de commande (20) est en outre configuré pour approximer la différence entre les première et seconde grandeurs de courant et la différence entre les premier et second angles de courant à l'aide d'une fonction quadratique.

8. Système de commande de véhicule électrique selon la revendication 6, dans lequel le dispositif de commande (20) est en outre configuré pour faire fonctionner le moteur (30) par surmodulation en réponse au fait que l'utilisation de tension est supérieure à une valeur prédéterminée.

9. Support lisible par ordinateur non transitoire contenant des instructions de programme exécutées par un dispositif de commande (20), le support lisible par ordinateur comprenant :

des instructions de programme qui commandent une batterie (10) et un moteur (30) ;
des instructions de programme qui détectent un ordre de couple, une vitesse de moteur et un courant de moteur ;
des instructions de programme qui calculent une tension de moteur à partir du courant de moteur ;
des instructions de programme qui déterminent si une utilisation de tension selon une plage de vitesses du moteur (30) est supérieure à une valeur prédéterminée ;
des instructions de programme qui génèrent une fonction de correction de point de fonctionnement d'après la vitesse de moteur en réponse au fait que l'utilisation de tension est inférieure à la valeur prédéterminée ;
des instructions de programme qui calculent un ordre de courant d'après la vitesse de moteur à partir de la fonction de correction de point de fonctionnement ; et
des instructions de programme qui fournissent en sortie l'ordre de courant calculé ;

dans lequel la génération d'une fonction de correction de point de fonctionnement comporte :

des instructions de programme qui établissent une carte de courant par rapport à une première vitesse de moteur ;
des instructions de programme qui calculent une première grandeur d'un premier courant d'axe d et d'un premier courant d'axe q, et un premier angle du premier courant d'axe d et du premier courant d'axe q au sein d'un repère synchrone par rapport à un ordre de couple à la première vitesse de moteur ;
des instructions de programme qui établissent un point de fonctionnement par rapport à une seconde vitesse de moteur ;
des instructions de programme qui calculent une seconde grandeur d'un second courant d'axe d et d'un second courant d'axe q, et un second angle du second courant d'axe d et du second courant d'axe q par rapport à la seconde vitesse de moteur ;
des instructions de programme qui calculent une différence entre les première et seconde grandeurs de courant et une différence entre les premier et second angles de courant ; et
des instructions de programme qui calculent la fonction de correction de point de fonctionnement par approximation de la différence de la grandeur de courant et de la différence de l'angle de courant.

10. Support lisible par ordinateur non transitoire selon la revendication 9, dans lequel la détermination de la carte de courant à partir de la première vitesse de moteur comporte des instructions de programme qui balayent un premier courant continu fourni par la batterie.

11. Support lisible par ordinateur non transitoire selon la revendication 9, dans lequel la détermination du point de fonctionnement à partir de la seconde vitesse de moteur comporte des instructions de programme qui balayent un second courant continu fourni par la batterie.

12. Support lisible par ordinateur non transitoire selon la revendication 9, dans lequel l'approximation de la différence entre la grandeur de courant et l'angle de courant comporte des instructions de programme qui approximent la différence entre les première et seconde grandeurs de courant et la différence des premier et second angles de courant à l'aide d'une fonction quadratique.

13. Support lisible par ordinateur non transitoire selon la revendication 9, comprenant en outre des instructions de programme qui font fonctionner le moteur (30) par surmodulation en réponse au fait que l'utilisation de tension est supérieure à une valeur prédéterminée.

# FIG. 1

```
   10              20              30
┌──────────┐   ┌────────────┐   ┌──────────┐
│ Battery  │───│ Controller │───│  Motor   │
└──────────┘   └────────────┘   └──────────┘
```

# FIG. 2

```
              ┌─────────────┐
              │    Start    │
              └─────────────┘
                     │
      ┌──────────────────────────────┐
      │ Input torque command to       │─── S110
      │ controller                    │
      └──────────────────────────────┘
                     │
      ┌──────────────────────────────┐
      │ Detect motor speed and current│─── S120
      └──────────────────────────────┘
                     │
      ┌──────────────────────────────┐
      │ Calculate motor voltage       │─── S130
      └──────────────────────────────┘
                     │
               ◇ Voltage utilization of        Yes   ┌────────────────┐
     S140 ──── ◇ the motor > predetermined ───────── │ Control motor by│─── S150
               ◇ value?                              │ overmodulation  │
                     │ No                            └────────────────┘
      ┌──────────────────────────────┐
      │ Calculate operating point     │─── S200
      │ correcting function           │
      └──────────────────────────────┘
                     │
      ┌──────────────────────────────┐
      │ Calculate current command     │─── S300
      │ according to motor speed      │
      └──────────────────────────────┘
                     │
      ┌──────────────────────────────┐
      │ Output current command        │─── S160
      └──────────────────────────────┘
                     │
              ┌─────────────┐
              │     End     │
              └─────────────┘
```

# FIG. 3

| | |
|---|---|
| Set current map from first motor speed | ⌐ S210 |

↓

| | |
|---|---|
| Calculate current magnitude (Id1) and current angle (Beta1) from first motor speed | ⌐ S220 |

↓

| | |
|---|---|
| Set operating point from second motor speed | ⌐ S230 |

↓

| | |
|---|---|
| Calculate current magnitude (Id2) and current angle (Beta2) from second motor speed | ⌐ S240 |

↓

| | |
|---|---|
| Calculate difference of current magnitude (Delta_Is) and difference of current angle (Delta_Beta) from first motor speed and second motor speed | ⌐ S250 |

↓

| | |
|---|---|
| Calculate operating point correcting function by approximating Delta_Is and Delta_Beta | ⌐ S260 |

# FIG. 4

| Calculate new current magnitude (Id_new) and new current angle (Beta_new) | ⌐ S310 |

↓

| Calculate new current commad according to motor speed | ⌐ S320 |

# FIG. 5

Iq (A)

Fist motor speed

Second motor speed

Id(A)

**EP 2 889 179 B1**

## REFERENCES CITED IN THE DESCRIPTION

### Patent documents cited in the description

- EP 2093098 A1
- US 20090237021 A1